(19) **Europäisches Patentamt / European Patent Office / Office européen des brevets**

(11) **EP 1 924 006 A1**

(12) **EUROPEAN PATENT APPLICATION**

(43) Date of publication:
**21.05.2008 Bulletin 2008/21**

(51) Int Cl.:
**H04B 7/005** (2006.01)    **H04Q 7/38** (2006.01)

(21) Application number: **07020494.6**

(22) Date of filing: **19.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.11.2006 KR 20060112062**

(71) Applicant: **Samsung Electronics Co., Ltd.**
**Yeongtong-gu**
**Suwon-si, Gyeonggi-do (KR)**

(72) Inventors:
• **Jung, Young-Ho**
  Suwon-si
  Gyeonggi-do (KR)
• **You, Cheol-Woo**
  Suwon-si
  Gyeonggi-do (KR)
• **Kim, Yung-Soo**
  Suwon-si
  Gyeonggi-do (KR)

(74) Representative: **Boakes, Jason Carrington**
**Harrison Goddard Foote**
**106 Micklegate**
**York, YO1 6JX (GB)**

(54) **Method and apparatus for transmitting a signal in a communication system**

(57) Disclosed is a method for transmitting a signal in a communication system supporting multiple communication service modes. The base station includes at least one preamble generator for generating a preamble to which a sequence and a cell identifier (ID) of the base station are allocated, the sequence being one-to-one mapped to one communication service mode supportable by the base station. By the method, in mobile communication systems after the 3G communication system, it is possible to support multiple communication service modes optimized for multiple communication environments in a single communication system and to provide each mobile station with an optimum communication service mode for a specific communication environment of the mobile station.

FIG.1

EP 1 924 006 A1

**Description**

**BACKGROUND OF THE INVENTION**

1. Field of the Invention

The present invention relates to a communication system, and more particularly to a method and an apparatus for transmitting a signal in a communication system supporting a plurality of communication service modes optimally designed for different communication environments.

2. Description of the Related Art

With the rapid development in current communication technology, users communicate in a situation in which multiple communication service modes are mixed.

As an example of such multiple communication service modes, a new communication service may be commercialized in addition to a currently provided existing communication service so that subscribers of the new communication service are mixed with users of the existing communication service in the same space. This situation, in which multiple communication service modes are mixed, has been attracting more attention in mobile communication systems after implementation of the third generation (3G) communication system.

However, each conventional communication system provides only a single communication service mode specified for each situation by using a single wireless access technology, i.e., in conventional communication systems, each service provider independently provides his/her own service. Therefore, in order to use two or more kinds of communication services in the same area, a user should either separately purchase mobile stations supporting different types of service modes or purchase a multi-mode mobile station supporting multiple service modes. At this time, the different types of service modes include a Wireless Local Area Network (WLAN) mode, a second generation Code Division Multiple Access (CDMA) mode, a Wireless Broadband Internet (WiBro) mode, and a Wideband CDMA (W-CDMA) mode.

Therefore, mobile communication systems after the implementation of the 3G communication system have been required to support multiple communication service modes optimized for multiple communication environments in a single communication system, and have been required to be equipped with technology necessary to provide each mobile station with an optimum communication service mode for a specific communication environment of the mobile station.

**SUMMARY OF THE INVENTION**

Accordingly, the present invention has been made to solve the abovementioned problems occurring in the prior art, and the present invention provides a method and an apparatus which support multiple communication service modes in a single communication system in order to provide an optimum service to a mobile station.

Also, the present invention provides a method and an apparatus for providing a reference signal by a base station so that a mobile station can estimate an expected performance from each communication service mode supported by each base station.

In accordance with an aspect of the present invention, there is provided a base station for transmitting a signal in a communication system supporting multiple communication service modes, the base station including at least one preamble generator for generating a preamble to which a sequence and a cell IDentifier (ID) of the base station are allocated, the sequence being one-to-one mapped to one communication service mode supportable by the base station.

In accordance with another aspect of the present invention, there is provided a mobile station for receiving a signal in a communication system supporting multiple communication service modes, the mobile station including a preamble receiver for receiving a preamble to which a sequence and a cell ID of a base station are allocated, the sequence being one-to-one mapped to one of the multiple communication service modes based on the cell ID.

In accordance with another aspect of the present invention, there is provided a base station for transmitting a signal in a communication system supporting multiple communication service modes, the base station including a reference signal generator for generating a single preamble to which a sequence corresponding to a cell ID of the base station is allocated; and a broadcast channel generator for setting a broadcast channel for a transmission/reception of corresponding service data between the base station and a mobile station, and generating a broadcast channel signal necessary to determine an optimum communication service mode for the mobile station and an optimum base station supporting the optimum communication service mode.

In accordance with another aspect of the present invention, there is provided a mobile station for receiving a signal in a communication system supporting multiple communication service modes, the mobile station including a preamble receiver for receiving a reference signal of a base station and a single preamble from the base station and transmitting them to a correlator, wherein a sequence corresponding to a cell ID of the base station is allocated to the signal preamble; and a broadcast channel signal receiver for receiving, through a broadcast channel between the base station and the mobile station, a communication service mode combination supportable by the base station and a broadcast channel signal necessary to determine of an optimum communication service mode from among communication service modes included in the communication service mode combination.

In accordance with another aspect of the present invention, there is provided a method for transmitting a signal of a base station in a communication system supporting multiple communication service modes, the method including generating preambles to each of which a sequence and a cell IDentifier (ID) of the base station are allocated, each sequence being one-to-one mapped to a communication service mode supportable by the base station.

In accordance with another aspect of the present invention, there is provided a method for receiving a signal of a mobile station in a communication system supporting multiple communication service modes, the method including receiving a preamble to which a sequence and a cell ID of a base station are allocated, the sequence being one-to-one mapped to one of the multiple communication service modes based on the cell ID.

In accordance with another aspect of the present invention, there is provided a method for transmitting a signal of a base station in a communication system supporting multiple communication service modes, the method including generating a single preamble to which a sequence corresponding to a cell ID of the base station is allocated; and setting a broadcast channel for a transmission/reception of corresponding service data between the base station and a mobile station, and generating a broadcast channel signal necessary to determine an optimum communication service mode for the mobile station and an optimum base station supporting the optimum communication service mode.

In accordance with another aspect of the present invention, there is provided a method for receiving a signal of a mobile station in a communication system supporting multiple communication service modes, the method including receiving a reference signal of a base station and a single preamble from the base station and transmitting them to a correlator, wherein a sequence corresponding to a cell ID of the base station is allocated to the signal preamble; and receiving, through a broadcast channel between the base station and the mobile station, a communication service mode combination supportable by the base station and a broadcast channel signal necessary to determine an optimum communication service mode from among communication service modes included in the communication service mode combination.

## BRIEF DESCRIPTION OF THE DRAWINGS

The above and other aspects, features and advantages of the present invention will be more apparent from the following detailed description taken in conjunction with the accompanying drawings, in which:

FIG. 1 is a block diagram illustrating a structure of a communication system supporting multiple communication service modes according to an exemplary embodiment of the present invention;

FIG 2 is a conceptual view illustrating a cell arrangement of a mobile communication system according to an exemplary embodiment of the present invention;

FIG. 3 illustrates a table for allocating preamble sequences of communication service modes for each base station according to the first embodiment of the present invention;

FIG. 4 is a block diagram illustrating an apparatus for generating a reference signal of a base station according to the first embodiment of the present invention;

FIG 5 is a block diagram illustrating a structure of a mobile station according to the first embodiment of the present invention;

FIG. 6 is a block diagram illustrating an apparatus for generating a reference signal of a base station according to the second embodiment of the present invention; and

FIG. 7 is a block diagram illustrating a structure of a mobile station according to the second embodiment of the present invention.

## DETAILED DESCRIPTION OF THE EXEMPLARY EMBODIMENT

Hereinafter, exemplary embodiments of the present invention will be described with reference to the accompanying drawings. In the following description, the same elements will be designated by the same reference numerals although they are shown in different drawings. Further, various specific definitions found in the following description are provided only to facilitate a general understanding of the present invention, and it is apparent to those skilled in the art that the present invention can be implemented without such definitions. Further, in the following description of the present invention, a detailed description of known functions and configurations incorporated herein will be omitted when it may make the subject matter of the present invention rather unclear.

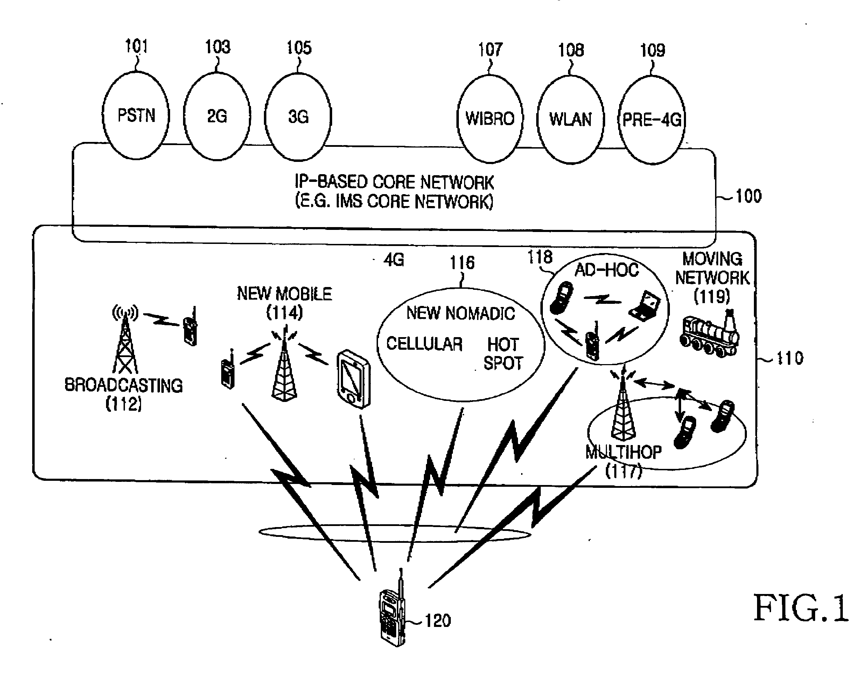

FIG 1 is a block diagram illustrating a structure of a communication system supporting multiple communication service modes according to an exemplary embodiment of the present invention.

Referring to FIG 1, a core network 100 supports multiple service modes based on Internet Protocols (IPs). The service modes include a Public Switched Telephone Network (PSTN) mode 101, a second generation (2G) mode 103, a third generation (3G) mode 105, a Wireless Broadband Internet (WiBro) mode 107, a Wireless Local Area Network (WLAN) mode 108, and a pre-fourth generation (pre-4G) mode 109,

A mobile station 120 can use the 4G service through the various communication service modes 101 to 109 supporting the 4G system service 110, i.e., various means for using the 4G service include broadcasting 112, a new mobile communication 114, a nomadic mode 116, which is a hot spot communication mode of a low speed mobile environment, a multi-hop communication 117, an ad hoc communication 118, and a moving network 119.

The following description is based on an assumption that a single wireless communication system supports multiple communication service modes optimized for a user in the various communication environments as shown in FIG. 1 and has multiple Radio Access Technologies (RATs) specified for each communication service mode, Also, it is assumed that each base station can support two or more types of communication service modes, and a combination of supported communication service modes may be different according to the corresponding base station.

The present invention proposes a method for transmitting/receiving a reference signal for communication service mode search between a mobile station and an Always Best Connected (ABC)/Always Best Service (ABS) providing base station, so that each mobile station can use ABS and can connect with the ABS providing base station (ABC). Specifically, the present invention proposes a method for constituting a broadcast channel and a preamble for providing means for obtaining an estimated performance for each communication service mode and information on communication service modes supportable by each base station, and an apparatus for transmitting the broadcast channel and the preamble.

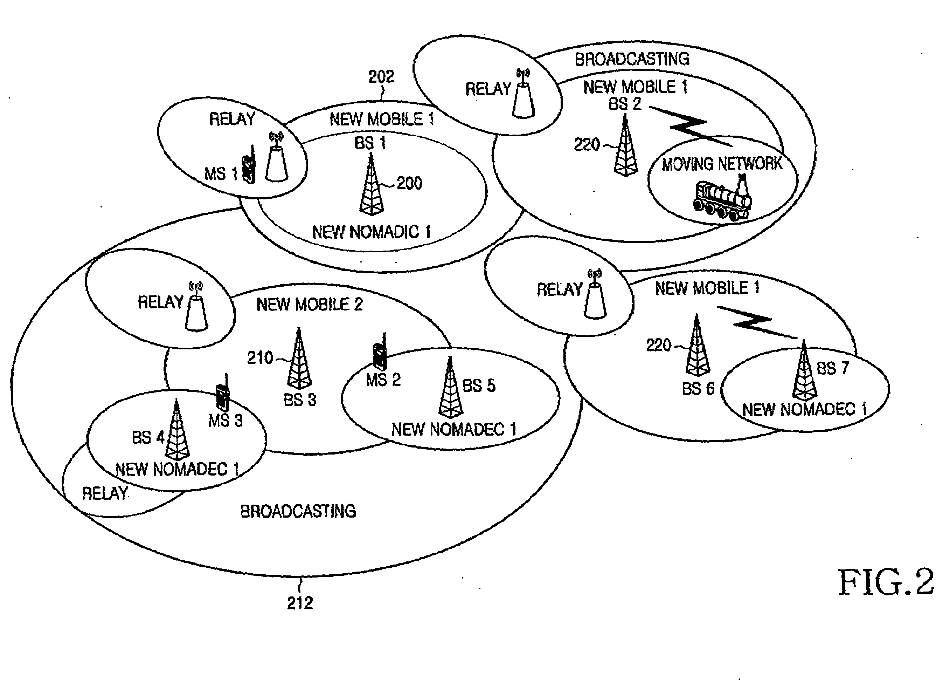

FIG. 2 is a conceptual view illustrating a cell arrangement of a mobile communication system according to an exemplary embodiment of the present invention.

It is noted from FIG. 2 that the size of a cell coverage 202 of a Base Station (BS) #1 200 and the size of a cell coverage 212 of a BS #3 210 change according to the communication service modes provided by them. The communication service modes provided by the BS #1 200 include a mobile mode and a nomadic mode. In contrast, the communication service modes provided by the BS #2 210 include a broadcasting mode and a moving network mode, i.e., the BS #1 200 and the BS #2 210 provide different modes of communication service with different sizes of coverage. In other words, even the same base station may have different sizes of cell coverage according to each communication service mode, and at this time powers of transmission signals may be different according to each communication service mode. Therefore, each base station can simultaneously support multiple communication service modes by using separate RATs and separate resources of time, frequency, and space.

According to the first embodiment of the present invention described below, a base station transmits a reference signal by using multiple preambles That is, the base station preliminarily allocates a cell specific preamble that corresponds on a 1:1 basis to information of each communication service mode and a cell ID. Thereafter, the base station multiplies proper coefficients by preambles corresponding to supportable communication service modes from among the preambles corresponding to the allocated cell ID, adds products of the multiplication, and then transmits a sum of the products to a corresponding mobile station. Then, by using reception signals for the preambles transmitted from multiple cells, the mobile station estimates expected performance for each communication service mode provided by a corresponding base station, and determines a combination of a base station and a communication service mode, which can provide ABC/ABS.

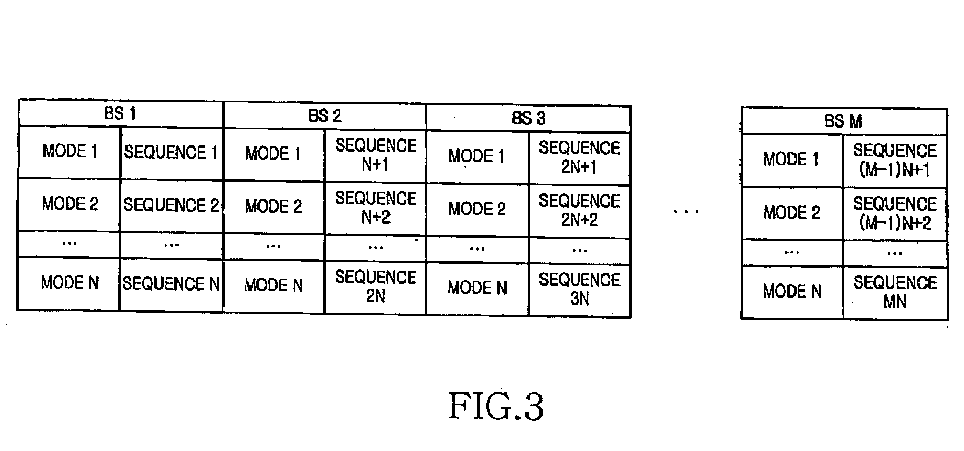

FIG. 3 illustrates a table for allocating preamble sequences of communication service modes for each base station according to the first embodiment of the present invention.

Referring to FIG 3, each of M cell IDs provides a maximum of N communication service modes, and each base station is allocated one cell ID. Further, specific preambles, which are mapped on a 1:1 basis to the N service modes supportable by each base station, are allocated in the form of sequences.

For example, a base station allocated a cell ID #3 can support a maximum of N communication service modes, and specific preambles, that is, sequences from the sequence 2N+1 to the sequence 3N, are allocated and mapped on a 1:1 basis to the N number of scenarios, respectively. The specific preamble may include either one of a code, a frequency, and a time, or at least one multiplexed combination of a code, a frequency, and a time so that the code, the frequency, and the time can be discriminated from each other

The specific preambles corresponding to the communication service modes of a corresponding base station constituted as shown in FIG. 3 may be either simultaneously transmitted through a single transmission antenna of the base station or separately transmitted through multiple antennas.

Further, the preamble for each base station is transmitted to a corresponding mobile station with a transmission power proportional to the cell radius, i.e., with a transmission power differentiated according to the transmission power ratio of a data transmission interval. Then, upon receiving the preamble for each base station, the mobile station detects a transmission power for each preamble sequence, and searches for a communication service mode and a base station providing a communication service mode that is optimum in view of the corresponding user, Thereafter, each mobile station requests the searched base station to provide the searched optimum service mode.

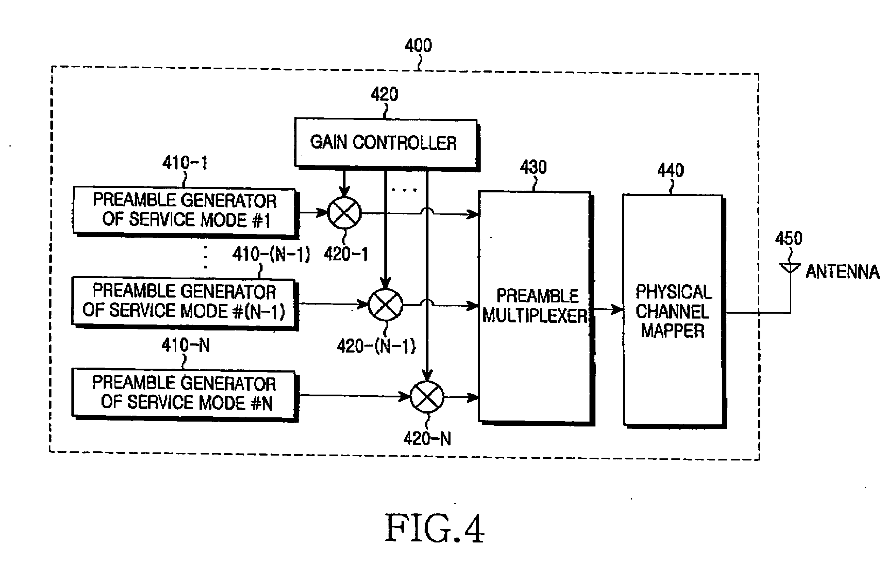

FIG. 4 is a block diagram illustrating an apparatus for generating a reference signal of a base station according to the first embodiment of the present invention.

Referring to FIG. 4, the reference signal generating apparatus 400 includes N preamble generators 410-1 to 410-N for N communication service modes, a gain controller 420, multipliers 420-1 to 420-N, a preamble multiplexer 430, a physical channel mapper 440, and an antenna 450.

Here, it is assumed that the base station supports N communication service modes, and the N preamble generators 410-1 to 410-N perform the same operation and the multipliers perform the same operation. Therefore, an operation through only one path including the specific preamble generator 410-1 of the communication service mode #1 and the multiplier #1 420-1 will be described hereinafter as a representative example.

The specific preamble generator 410-1 of the communication service mode #1 allocates a sequence #1 corresponding to the communication service mode #1 and transfers the sequence #1 to the multiplier 420-1. The gain controller 420 controls a gain value of the power proportional to the cell radius of the base station, multiplies the gain-controlled power by the sequence #1, and then transmits a product of the multiplication to the preamble multiplexer 430. If a corresponding cell does not support the communication service mode #1, the sequence #1 generator 410-1 does not operate, and the gain controller 420 adjusts a gain value of a corresponding preamble to 0. At this time, the base station may have different cell radii according to each communication service mode supported by the base station.

The preamble multiplexer 430 receives the sequences #1 to #N according to the N communication service modes, and then either multiplexes them according to each of the code, the frequency, and the time or multiplexes at least one of the code, the frequency, and the time into one combination in which the code, the frequency, and the time are discriminated from each other. Then, the preamble multiplexer 430 transmits the multiplexed sequences to the physical channel mapper 440.

The physical channel mapper 440 maps the multiplexed sequences of the communication service modes to corresponding physical channels and then transmits the mapped sequences through the antenna 450. Although the multiplexed sequences of the communication service modes are transmitted through the single transmission antenna 450 in the present embodiment, the multiplexed sequences of the communication service modes can be separately transmitted through multiple antennas.

After receiving the sequences according to the communication service modes from a corresponding base station, the mobile station can detect the type and measure the power of the corresponding sequence received through a correlator for each preamble, thereby estimating a reception Signal to Noise Ratio (SNR) according to each combination of the cell ID and the communication service mode of the base station uniquely corresponding to the sequence, that is, the preamble. Therefore, by using the estimated SNR value, each mobile station can select an ABC/ABS base station satisfying a corresponding reference value prepared in advance.

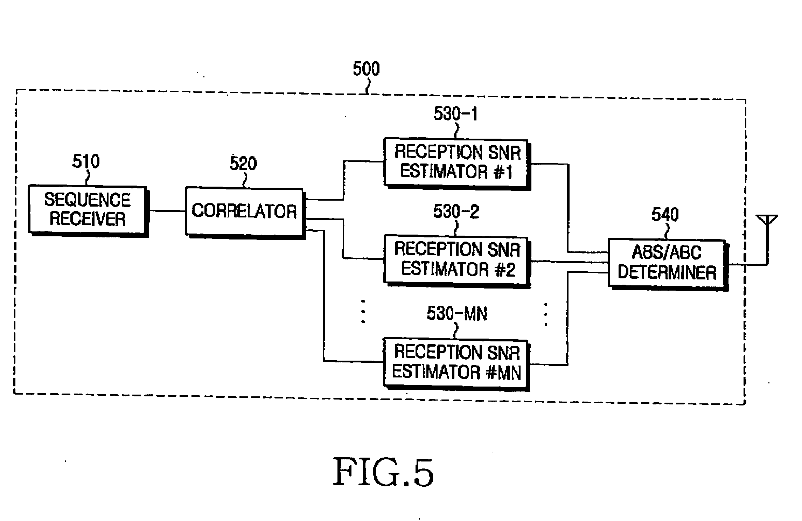

FIG. 5 is a block diagram illustrating a structure of a mobile station according to the first embodiment of the present invention.

Referring to FIG. 5, the mobile station 500 includes a sequence receiver 510, a correlator 520, SNR estimators 530-1 to 530-MN according to each cell ID-communication service mode combination provided by the base station, and an ABS/ABC determiner 540. It is assumed that the mobile station 500 is aware, in advance, of the preambles allocated as sequences corresponding to the communication service mode supported by each base station as illustrated in the table of FIG. 3.

The sequence receiver 510 receives a time/frequency domain signal containing the preamble and transmits the received signal to the correlator 520. At this time, the preamble may be either separately received according to the code, the frequency, and the time for each communication service mode or received as a combination of the code, the frequency, and the time.

The correlator 520 detects the type and measures the power of an effectively received corresponding sequence from among the preamble sequences in the table of FIG. 3 that the correlator 520 is aware of, in advance, and searches for a reception power value according to a base station communication service mode uniquely corresponding to each preamble. The correlator 520 separates the sequences according to the searched base station communication service mode and transmits the separated sequences to corresponding reception SNR estimators 530-1 to 530-MN, respectively. Each of the reception SNR estimators 530-1 to 530-MN estimates a reception SNR of a corresponding sequence and then transmits the estimated SNR to the ASS/ABC determiner 540.

The ABS/ABC determiner 540 receives the estimated SNR values according to the communication service modes and then determines a communication service mode of an ABS/ABC providing base station based on a communication service mode determining standard of each user. At this time, a method for determining a communication service mode for each user can be defined by Equation (1) below.

$$\left[ID\_opt_u, mode\_opt_u\right] = \arg{}_t, \max(SNR_{i,m}, R_u, S_u, v_u, C_u) \qquad \cdots\cdots\cdots\cdots (1)$$

In Equation (1), $ID\_opt_u$ and $mode\_opt_u$ indicate a cell ID and a communication service mode of an ABS/ABC providing base station of a $u^{th}$ user, respectively, and $f_u()$ indicates a determination reference function of the $u^{th}$ user, elements of which are items in (). Further, $SNR_{i,m}$ indicates a reception SNR value of a preamble corresponding to the $m^{th}$ communication service mode of the $i^{th}$ cell ID, $R_u$ indicates a required data rate of the $u^{th}$ user, $S_u$ indicates a required service type of the $u^{th}$ user, $v_u$ indicates a moving speed of the $u^{th}$ user, and $C_u$ indicates a fee schedule table according to the communication service mode of the $u^{th}$ user.

In the present embodiment, the SNR value, the speed, the required data rate, the required service type, the fee schedule, and the moving speed are used as the reference values for the ABC/ABS selection. However, according to another embodiment, other parameters may be used as the reference values for the ABC/ABS selection.

Hereinafter, a method and an apparatus for providing an ABS/ABC service to a corresponding mobile station through a broadcast channel and a single preamble of each base station according to a second embodiment of the present invention will be described.

Specifically, the base station sets a broadcast channel for providing a service to a mobile station, and each base station transmits a single preamble allocated according to the cell ID. The broadcast channel includes information on the types of communication service modes that the base station can provide to the mobile station, and information on a difference between a reception SNR value of each communication service mode and a reception SNR value of a reference preamble. The reference signal is transmitted in the form of either a bitmap or the reference signal is including a message to be transmitted to the mobile station.

After receiving a single preamble from the base station, the mobile station estimates a cell ID and a reference SNR of each base station by using the received signal preamble. Thereafter, the mobile station receives a broadcast channel signal through the connection-set broadcast channel, estimates a reception SNR of a communication service mode of each base station by using the broadcast channel information and the reference SNR of the mobile station itself, and determines an optimum ABS/ABC service in the same way as that of the ABS/ABC determiner according to the first embodiment of the present invention.

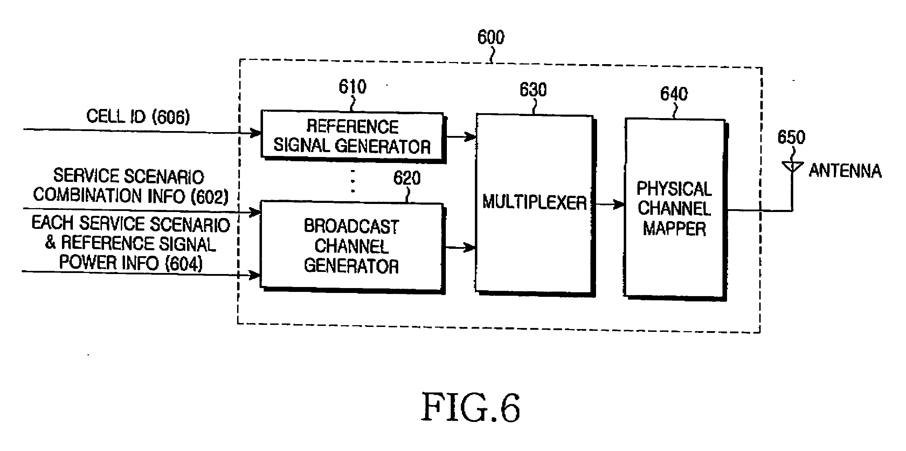

FIG. 6 is a block diagram illustrating an apparatus for generating a reference signal of a base station according to the second embodiment of the present invention.

Referring to FIG. 6, the base station 600 includes a reference signal generator 610, a broadcast channel generator 620, a multiplexer 630, a physical channel mapper 640, and an antenna 650.

The base station 600 sets a broadcast channel for providing a service to a mobile station and receives reference signal generation information through the broadcast channel. The reference signal generation information includes reference power information of the base station 600, information of communication service mode combinations supportable by the base station 600, and information of power differences between the reference signal and the signals of the communication service modes included in the communication service mode combination.

The reference signal generator 610 generates a single preamble of the base station 600 determined from the cell ID 606 and transmits the generated single preamble to the multiplexer 630.

The broadcast channel generator 620 generates a broadcast channel signal by using the received information of the differences between the reception power of the reference signal and the expected reception powers according to the communication service modes supportable by the base station 600 received through the broadcast channel, and then transmits the broadcast channel signal to the multiplexer 630. The multiplexer 630 multiplexes the reference signal and the broadcast signal and transmits the multiplexed signal to the physical channel mapper 640. At this time, the broadcast channel signal is transmitted in the form of either a bitmap or the reference signal is including a message to be transmitted to the mobile station. The physical channel mapper 640 maps the multiplexed signal to a physical channel and then transmits the mapped signal through the antenna 650.

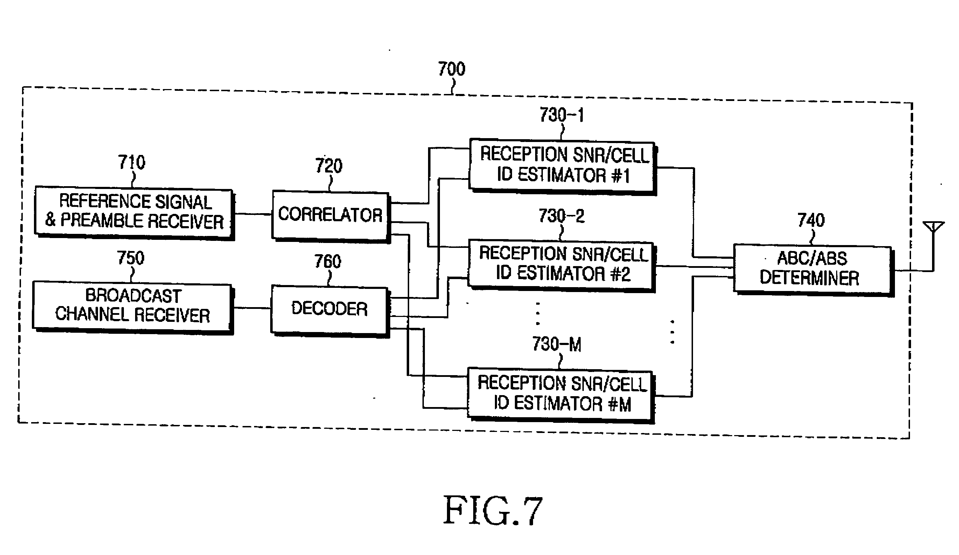

FIG. 7 is a block diagram illustrating a structure of a mobile station according to the second embodiment of the present invention.

Referring to FIG 7, the mobile station 700 includes a preamble receiver 710, a correlator 720, reception SNR/cell ID estimators 730-1 to 730-M, an ABC/ABS determiner 740, a broadcast channel receiver 750, and a decoder 760.

The preamble receiver 710 receives multiplexed signals each containing a reference signal from multiple surrounding base stations and transmits the received signals to the correlator 720.

The correlator 720 calculates M preamble sequences corresponding to the cell IDs and correlation values, and transmits a reference reception power value of a base station corresponding to each cell ID to each of the SNR/cell ID estimators 730-1 to 730-M,

The broadcast channel receiver 750 receives a broadcast channel signal through the broadcast channel set between the base station and the mobile station and transmits the received broadcast channel signal to the decoder 760. The decoder 760 decodes the power difference information between the reference signal and the received signal and the supportable communication service mode information of each base station and transmits the decoded information to the SNR/cell ID estimators 730-1 to 730-M.

The SNR/cell ID estimators 730-1 to 730-M estimate SNR of each cell ID communication service mode and transmits the estimated information to the ABC/ABS determiner 740.

The ABC/ABS determiner 740 detects an optimum combination of a base station and a communication service mode in the same manner as that of the ABC/ABS determiner 540.

According to the present invention, each user can select a base station and a communication service mode, which are optimal to the user, in a system adaptively operating multiple radio access technologies optimized for multiple communication service modes considered in mobile communication systems after the 3G communication system. Therefore, it is possible to provide an ABS/ABC service to a corresponding mobile station.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A base station for transmitting a signal in a communication system supporting multiple communication service modes, the base station comprising:

   at least one preamble generator for generating a preamble to which a sequence and a cell IDentifier (ID) of the base station are allocated, the sequence being mapped on a one-to-one basis to one communication service mode supportable by the base station.

2. The base station as claimed in claim 1, further comprising a multiplexer for multiplexing a reference signal with a power gain value proportional to a cell radius of a corresponding communication service mode according to the sequence corresponding to the generated preamble; and
   at least one antenna for transmitting the reference signal.

3. The base station as claimed in claim 1, wherein the multiple communication service modes comprise at least two of a high speed mobile user communication service mode (a mobile mode), a low speed mobile user communication service mode (a nomadic mode), a relay communication service mode (a relay mode), an inter-user communication service mode (ad-hoc mode), a moving network communication service mode (a moving network mode), and a broadcast communication service mode (a broadcast mode).

4. The base station as claimed in claim 1, wherein further comprising a broadcast channel generator for setting a broadcast channel for a transmission/reception of corresponding service data between the base station and a mobile station, and generating a broadcast channel signal necessary to determine an optimum communication service mode for the mobile station and an optimum base station supporting the optimum communication service mode wherein the broadcast channel signal comprises reference signal transmission power information of the base station, information of communication service mode combinations supportable by the base station, and information of power differences between the reference signal and the signals of the communication service modes,

5. The base station as claimed in claim 4, further comprising a multiplexer for multiplexing the broadcast channel signal of the base station with the single preamble, thereby outputting a multiplexed signal.

6. A mobile station for receiving a signal in a communication system supporting multiple communication service modes, the mobile station comprising;
   a preamble receiver for receiving a preamble to which a sequence and a cell ID of a base station are allocated, the sequence being mapped on a one-to-one basis to one of the multiple communication service modes based on the cell ID;
   a correlator for identifying the cell ID and a communication service mode of the received preamble, and transmitting the received preamble to a corresponding Signal to Noise Ratio (SNR) estimator from among reception SNR estimators classified according to communication service modes supportable by the base station corresponding to the cell ID of the received preamble;
   a reception SNR estimator for estimating a reception SNR for the sequence allocated to the received preamble; and
   a determiner for receiving the estimated SNR value, and determining an optimum service mode and an optimum base station supporting the optimum service mode according to a communication service mode determination standard based on the estimated SNR value.

**7.** The mobile station as claimed in claim 6, wherein the preamble is obtained by multiplexing a power gain value proportional to a cell radius of one of the communication service modes supportable by the base station.

**8.** The mobile station as claimed in claim 6, wherein the multiple communication service modes comprise at least two of a high speed mobile user communication service mode (a mobile mode), a low speed mobile user communication service mode (a nomadic mode), a relay communication service mode (a relay mode), an inter-user communication service mode (an ad-hoc mode), a moving network communication service mode (a moving network mode), and a broadcast communication service mode (a broadcast mode).

**9.** The mobile station as claimed in claim 6, the wherein preamble receiver for receiving a reference signal of a base station and a single preamble from the base station and transmitting them to a correlator, wherein a sequence corresponding to a cell ID of the base station is allocated to the signal preamble.

**10.** The mobile station as claimed in claim 9, a correlator for calculating a reception power value of a reference signal of the base station; and
a decoder for decoding a communication service mode combination supportable by each base station and the information of differences between the reception power of the reference signal and the reception powers of the signals of the communication service modes included in the communication service mode combination from the broadcast channel signal; and
reception SNR estimators classified according to the communication service modes supportable by the base station corresponding to the cell ID by using the reception power value of the reference signal and an output of the decoder; wherein the broadcast channel signal comprises information of differences between a reception power of the reference signal and reception powers of signals of the communication service modes included in the communication service mode combination.

**11.** A method for transmitting a signal of a base station in a communication system supporting multiple communication service modes, the method comprising the steps of:

generating preambles to each of which a sequence and a cell IDentifier (ID) of the base station are allocated, each sequence being mapped on a one-to-one basis to a communication service mode supportable by the base station; and
transmitting the reference signal through at least one antenna.

**12.** The method as claimed in claim 24, further comprising multiplexing a reference signal with a power gain value proportional to a cell radius of the corresponding communication service modes according to the sequences corresponding to the generated preambles.

**13.** The method as claimed in claim 11, wherein the multiple communication service modes comprise at least two of a high speed mobile user communication service mode (a mobile mode), a low speed mobile user communication service mode (a nomadic mode), a relay communication service mode (a relay mode), an inter-user communication service mode (an ad-hoc mode), a moving network communication service mode (a moving network mode), and a broadcast communication service mode (a broadcast mode).

**14.** The method as claimed in claim 11, further comprising:

generating a single preamble to which a sequence corresponding to a cell ID of the base station is allocated; and
setting a broadcast channel for a transmission/reception of corresponding service data between the base station and a mobile station, and generating a broadcast channel signal necessary to determine an optimum communication service mode for the mobile station and an optimum base station supporting the optimum communication service mode.

wherein the broadcast channel signal comprises reference signal transmission power information of the base station, information of communication service mode combinations supportable by the base station, and information of power differences between the reference signal and the signals of the communication service modes.

**15.** The method as claimed in claim 14, further comprising:

    multiplexing the broadcast channel signal of the base station with the single preamble, thereby outputting a multiplexed signal.

**16.** A method for receiving a signal of a mobile station in a communication system supporting multiple communication service modes, the method comprising the steps of;
receiving a preamble to which a sequence and a cell ID of a base station are allocated, the sequence being mapped on a one-to-one mapped basis to one of the multiple communication service modes based on the cell ID
identifying the cell ID and a communication service mode of the received preamble; and
classifying communication service modes supportable by the base station corresponding to the cell ID of the received preamble according to each cell ID
estimating a reception SNR for the sequence allocated to the received preamble; and
receiving the estimated SNR value, and determining an optimum service mode and an optimum base station supporting the optimum service mode according to a communication service mode determination standard based on the estimated SNR value;
determining the optimum service mode further comprises using, as the communication service mode determination standard, an output value of a function having an input value that is at least one of the received SNR value, a required data rate of a user, a required service type, a moving speed, and a fee schedule table according to communication service modes of the user.

**17.** The method as claimed in claim 16, wherein the preamble is obtained by multiplexing a power gain value proportional to a cell radius of one of the communication service modes supportable by the base station.

**18.** The method as claimed in claim 16, wherein the multiple communication service modes comprise at least two of a high speed mobile user communication service mode (a mobile mode), a low speed mobile user communication service mode (a nomadic mode), a relay communication service mode (a relay mode), an inter-user communication service mode (an ad-hoc mode), a moving network communication service mode (a moving network mode), and a broadcast communication service mode (a broadcast mode).

**19.** The method as claimed in claim 16, further comprising
receiving a reference signal of a base station and a single preamble from the base station and transmitting them to a correlator, wherein a sequence corresponding to a cell ID of the base station is allocated to the signal preamble.

**20.** The method as claimed in claim 16, further comprising :

    receiving, through a broadcast channel between the base station and the mobile station, a communication service mode combination supportable by the base station and a broadcast channel signal necessary to determine an optimum communication service mode from among communication service modes included in the communication service mode combination; and
    calculating a reception power value of a reference signal of the base station; and
    decoding a communication service mode combination supportable by each base station and the information of differences between the reception power of the reference signal and the reception powers of the signals of the communication service modes included in the communication service mode combination from the broadcast channel signal; and
    classifying the communication service modes supportable by the base station corresponding to the cell ID by using the reception power value of the reference signal and decoded information.

wherein, the broadcast channel signal comprises information of differences between a reception power of the reference signal and reception powers of signals of the communication service modes included in the communication service mode combination.

FIG.1

EP 1 924 006 A1

RELAY

NEW MOBILE 1

BS 1

202

200

NEW NOMADIC 1

RELAY

MS 1

BROADCASTING

NEW MOBILE 1

BS 2

220

MOVING NETWORK

RELAY

NEW MOBILE 2

210

BS 3

MS 3

MS 2

BS 5

BS 4

NEW NOMADEC 1

NEW NOMADEC 1

RELAY

BROADCASTING

212

RELAY

NEW MOBILE 1

220

BS 6

BS 7

NEW NOMADEC 1

FIG.2

EP 1 924 006 A1

| BS 1 | | BS 2 | | BS 3 | |
|---|---|---|---|---|---|
| MODE 1 | SEQUENCE 1 | MODE 1 | SEQUENCE N+1 | MODE 1 | SEQUENCE 2N+1 |
| MODE 2 | SEQUENCE 2 | MODE 2 | SEQUENCE N+2 | MODE 2 | SEQUENCE 2N+2 |
| ... | ... | ... | ... | ... | ... |
| MODE N | SEQUENCE N | MODE N | SEQUENCE 2N | MODE N | SEQUENCE 3N |

. . .

| BS M | |
|---|---|
| MODE 1 | SEQUENCE (M-1)N+1 |
| MODE 2 | SEQUENCE (M-1)N+2 |
| ... | ... |
| MODE N | SEQUENCE MN |

FIG.3

EP 1 924 006 A1

FIG.4

EP 1 924 006 A1

FIG.5

EP 1 924 006 A1

EP 1 924 006 A1

CELL ID (606)

SERVICE SCENARIO
COMBINATION INFO (602)

EACH SERVICE SCENARIO
& REFERENCE SIGNAL
POWER INFO (604)

600

610

REFERENCE
SIGNAL GENERATOR

620

BROADCAST
CHANNEL
GENERATOR

630

MULTIPLEXER

640

PHYSICAL
CHANNEL
MAPPER

650

ANTENNA

FIG.6

FIG.7

EP 1 924 006 A1

**EP 1 924 006 A1**

European Patent Office

**EUROPEAN SEARCH REPORT**

Application Number

EP 07 02 0494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/26409 A (ERICSSON TELEFON AB L M [SE]) 12 April 2001 (2001-04-12)<br><br>* abstract *<br>* page 4, lines 2-23 *<br>* page 8, line 22 - page 10, line 26 *<br>* page 12, lines 6-18 *<br>* page 14, lines 4-14 *<br>* page 15, lines 13-19 *<br>* page 18, lines 15-18 * | 1,3,6,8, 9,11,13, 16,18,19 | INV.<br>H04B7/005<br>H04Q7/38 |
| A | | 2,4,5,7, 10,12, 14,15, 17,20 | |
| X | US 2003/096614 A1 (PAILA TONI [FI]) 22 May 2003 (2003-05-22)<br>* abstract *<br>* paragraphs [0002], [0005], [0006], [0010], [0011], [0028], [0032], [0034] * | 1,3,11, 13 | |
| A | | 2,4-10, 12,14-20 | TECHNICAL FIELDS SEARCHED (IPC)<br><br>H04Q |

The present search report has been drawn up for all claims

| Place of search | Date of completion of the search | Examiner |
|---|---|---|
| Berlin | 10 March 2008 | Alonso Maleta, J |

EPO FORM 1503 03.82 (P04C01)

**ANNEX TO THE EUROPEAN SEARCH REPORT
ON EUROPEAN PATENT APPLICATION NO.**

EP 07 02 0494

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2008

| Patent document cited in search report | | Publication date | Patent family member(s) | | Publication date |
|---|---|---|---|---|---|
| WO 0126409 | A | 12-04-2001 | AU | 7977900 A | 10-05-2001 |
| | | | CN | 1402951 A | 12-03-2003 |
| | | | EP | 1219133 A1 | 03-07-2002 |
| | | | TW | 567735 B | 21-12-2003 |
| | | | US | 6600917 B1 | 29-07-2003 |
| US 2003096614 | A1 | 22-05-2003 | AU | 2002366066 A1 | 10-06-2003 |
| | | | EP | 1449050 A2 | 25-08-2004 |
| | | | WO | 03044616 A2 | 30-05-2003 |

EPO FORM P0459

For more details about this annex : see Official Journal of the European Patent Office, No. 12/82